# EUROPEAN PATENT SPECIFICATION

(11) **EP 1 616 474 B1**
(45) Date of publication and mention of the grant of the patent: **04.06.2008**
(21) Application number: 05388059.7
(22) Date of filing: 07.07.2005
(51) Int. Cl.: A01D 75/30

(54) **A towed mower comprising a running frame and two mowing aggregates**
Gezogener Mäher mit einem Tragrahmen und zwei Mähgeräten
Faucheuse tractée comprenant un châssis et deux dispositifs de fauchage

(30) Priority: 07.07.2004 DK 200401073
(43) Date of publication of application: 18.01.2006
(73) Proprietor: JF-Fabriken - J. Freudendahl A/S, 6400 Sonderborg (DK)
(72) Inventor: Freudendahl, Jørn, 6400 Sønderborg (DK)
(74) Representative: Joergensen, Bjoern Barker

(56) References cited:
- EP-A- 0 900 515
- EP-A- 1 106 051
- EP-A- 1 389 413

## Description

The present invention relates to a towed mower comprising a running frame and two mowing aggregates, the running frame being designed to be connected with a tractor to be towed thereby and being provided with ground wheels, the mowing aggregates being mounted by a hinge on each respective side of the running frame to swing in a horizontal plane between a laterally extending working position and a transport position.

A mower of this type is known from EP-A-1 106 051, which discloses a mower, in which each mowing aggregate has an associated swath collector in the form of a conveyor mounted in a frame, which is not the frame of the mowing aggregate. In a first embodiment the publication describes a mower, in which the mowing aggregates are swung in a vertical plane to an upright transport position, whereas each of the conveyors is swung in a horizontal plane to their respective rearwards extending transport position. In a second embodiment the mowing aggregate and the conveyor, respectively, are on each side connected to a beam, which is hinged to the running frame at its rear end and which swings horizontally forwards to a transport position. There is mention of a pass width of up to 9 meters corresponding to three mowing aggregates, each having a pass width of 3 meters.

EP-A-0 882 386 describes another mower comprising a running frame and two mowing aggregates mounted on each respective side of the running frame. In this case each of the mowing aggregates swings in their vertical plane to an upright transport position.

DE-U-202 04 398 discloses a mower with a carrier frame suspended in the rearmost lift arms of a tractor. The carrier frame carries on either side a mowing aggregate and a conveyor, which may be swung separately in a vertical plane to an upright transport position.

The mowers in question are intended for use in connection with a mower mounted in front of the tractor, said mowers cutting a path on either side of the track of the tractor, whereas the mower mounted in front is to cut a path corresponding to the track of the tractor.

Moreover, the mowers in question are adapted to be able to gather the mowed material around the centre line of the track of the tractor, either by means of said conveyors or by throwing the mowed material obliquely backwards by means of a throwing rotor and guiding screens.

It is a continuous wish and an object to develop wider mowers or mowing equipages to make it possible to mow a field in the fewest possible number of passes and consequently as quickly as possible.

There are, however, physical limitations to the biggest possible size of mowers, as regard has to be taken to the fact that it should be possible to transport the mowers on a public road and to make it possible for them to pass the gates of engine houses with a view to being stored. The latter consideration puts a limit to the possible size of mowing aggregates, which are swung in a vertical plane into upright transport positions.

In another embodiment according to EP-A-1 106 051 the size of the mowing aggregates may be bigger than shown, if the length of the running frame is correspondingly bigger. This has, however, the unfortunate effect that the wheels of the running frame are positioned further away from the tractor, which deteriorates the steerability of the entire equipage of tractor and mowers and increases the risk of the tracks of the foremost and the rearmost mower not overlapping one another for the formation of a single, wide track, if the tractor swings or rocks a little.

EP-A-900 515 discloses a universal frame to be towed behind a tractor. The universal frame comprises several coupling places, where the coupling device at the back of the tractor has been recreated so to speak. Thereby, it becomes possible to connect several similar implements behind a tractor at the same time for the attainment of a bigger pass width. The publication shows several different embodiments of the universal frame. As a general example, the use of the universal frame has been described in connection with haying implements. It is, however, mentioned in the publication that other types of implements may be coupled to the universal frame, for instance cultivators or mowers, but some of the embodiments are not usable for mowers, as it will not be possible to fold the universal frames together into a transport position, in which the total width of the aggregate is smaller than the three meters, which are in many countries the maximum allowable width for traffic on a public road. Thus, an implement coupled to the universal frame will be positioned approx. 1 m behind the frame corresponding to the space taken up by the recreated tractor coupling device. Mowers will not, like haying implements, be able to overlap as shown in Fig. 7, for which reason it will not be possible to bring the universal frame into the transport position, if mowers have been coupled thereto.

To meet the above-mentioned object a mower of the type stated by way of introduction is according to the invention characterized in that said hinges of the mowing aggregates are positioned at the front end of the running frame and that the mowing aggregates in the transport position extend rearwards from the hinges and above the rearmost end of the running frame. In this manner, it is possible to make the mowing aggregates very big, i.e. with a very big pass width without the need of having to place the wheels of the running frame far back, which would be detrimental to the steerability.

Preferably, the running frame is at its rearmost end provided with abutment means for supporting the mowing aggregates in the transport position. Thereby, a relief is established in respect of the means provided for lifting and swinging the mowing aggregates into the transport position.

Preferably, at least one of the mowing aggregates is provided with a device for lateral transport of mowed material. Thus, the mowed material may be gathered around the centre line of the track of the tractor for subsequent picking up by means of a pick-up with smaller width than the mower.

The transport device preferably comprises a running conveyor, which is preferably suspended in the frame structure of the mowing aggregate for movement between a working position and a transport position. By suspension of the conveyor in the frame structure of the mowing aggregate it is obtained that conveyor and mowing aggregate always move together, which always ensure a good handing over of mowed material from the mowing aggregate to the conveyor.

The mowing aggregates preferably comprise rotating mowing means, preferably cutter discs mounted on top of a cutter bar.

Preferably, each mowing aggregate comprises a frame structure and a beam extending from the hinge on the running frame to a second hinge connecting the beam with the frame structure. In this manner, the latter may swing about a horizontal axis to adapt the mowing aggregate to the surface of the ground.

The invention will be described in detail in the following by means of an example of an embodiment with reference to the schematic drawings, in which
Fig. 1 shows a perspective view, seen askew from above and from the back, of a mower, certain parts of which have been omitted for the sake of clarity,
Fig. 2 the mower of Fig. 1, askew from above and from the front,
Fig. 3 the mower of Figs 1 and 2, further parts being omitted, and the mowing aggregate shown in the transport position, and
Fig. 4 a view seen from above of an assembled mower equipage, in which the mower according to Fig. 1 has a mowing aggregate in the working position and a mowing aggregate in the transport position.

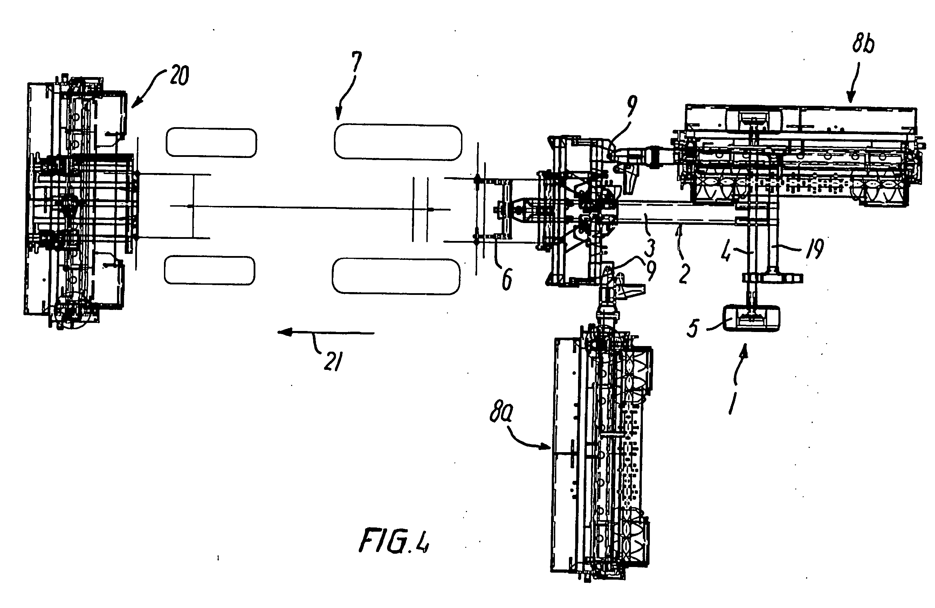

A mower 1 shown in the figures has according to the invention a T-shaped running frame 2 with a leg 3 and a crossbeam 4 in the T. At the ends of the crossbeam 4 ground wheels 5 are provided, said wheels carrying the mower at least partially. At the front end of the leg 3 a connection device 6 is provided for connecting the mower 1 with a tractor 7 (Fig. 4) for towing and possibly also to partially carry the mower 1.

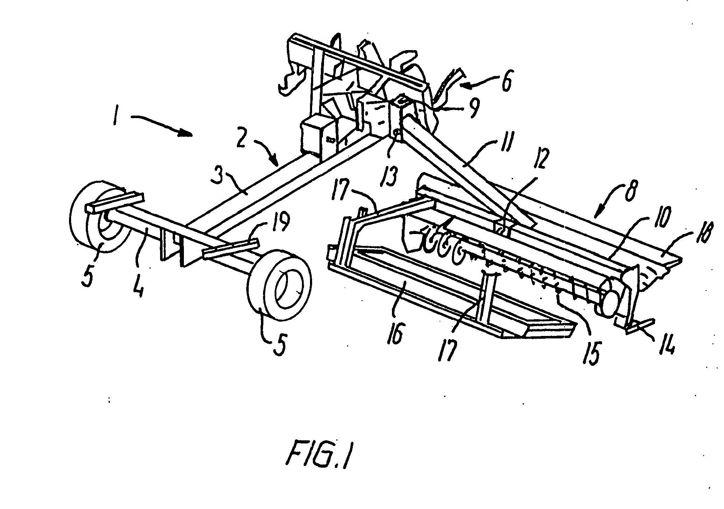

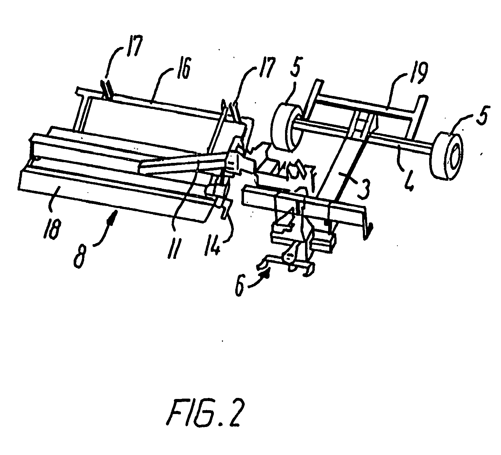

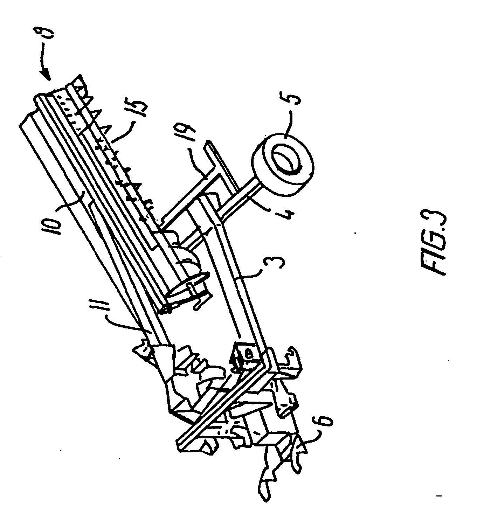

The mower 1 comprises two mowing aggregates 8, of which only one is shown in Figs 1-3, but in Fig. 4 both are shown. The mowing aggregates have been symmetrically mounted on the running frame. Thus, each mowing aggregate 8 is mounted at a first hinge 9 with a substantially vertical axis, about which the mowing aggregate 8 may swing in a horizontal plane between a working position and a transport position. In the working position the mowing aggregate 8 extends laterally from the running frame 2, and in the transport position the mowing aggregate 8 extends backwards, as will be described in detail in the following.

The mowing aggregate 8 has a frame structure 10 extending across the working width of the mowing aggregate. A beam 11 extends between a second hinge 12, which connects the beam 11 with the frame structure 10, and a third hinge 13, which is placed close to the first hinge 9. The second and the third hinges have a substantially horizontal hinge axis, which extends transversely to the beam 11. By swinging about the third hinge 13, the beam 11 is able to lift the mowing aggregate 8 from the ground. A power means not shown is provided, for instance a hydraulic cylinder, to swing the beam 11 and lift the mowing aggregate 8. Furthermore, a spring, not shown, is provided to act on the beam 11 in order to relieve the pressure of the mowing aggregate against the ground to a desired size. By swinging about the second hinge 12, the mowing aggregate 8 may adjust itself to the contour of the ground, where it is uneven, in a manner known per se.

The mowing aggregate 8 comprises, in addition to what has already been mentioned, mowing means, not shown, in the form of cutter discs mounted on a cutter bar, at the end of which slide shoes 14 are provided, which during operation slide across the ground and carry the part of the weight of the mowing aggregate, which is not carried by the running frame 2. Behind the mowing means a conditioning rotor 15 is provided. The rotor has at its end screw portions, which may transport material mowed by the mowing means towards the centre portion of the condition rotor 15, where crimp fingers are provided, which crimp or condition the material and throws it to the rear in a manner known per se.

The running frame 2 has a gear 22 for distribution of driving power from the power transmission shaft (PTO) of the tractor 7 to the mowing aggregates 8. Thus, the gear 22 has an input shaft, which points forwards towards the tractor, and two output shafts 23, which point to each their respective side towards the respective mowing aggregate. The mowing means or the cutter discs are placed in a row, one end of which being far away from the hinge 9 and the other end of which being closer to the hinge 9. Each mowing aggregate 8 is in a manner known per se provided with an input shaft, not shown, for driving power from the tractor. In respect of both mowing aggregates 8 this input shaft is placed at the end of the row of mowing means closest to the respective hinge 9. The respective output and input shafts are connected in a manner known per se by cardan shafts, not shown.

Furthermore, the mowing aggregate 8 comprises a conveyor 6, which by means of carrier arms 17, one of which has been partially cut away for the sake of clarity, is hinged to the frame structure 10. Thereby, the conveyor 16 can be swung in a vertical plane between the active position shown in Fig. 1 and an inactive position, lifted relative thereto.

In its active position the conveyor 16 may receive material thrown by the conditioning rotor 15 and transport it towards the centre line of the mower (the leg 3).

On the front side the mowing aggregate 8 is in a manner known per se provided with a safety cloth 18, which is carried by a frame, which may be folded.

The running frame 2 comprises above the crossbeam 4 an abutment means 19 for supporting the mowing aggregate 8 during transport.

In the equipage shown in Fig. 4, another mower 20 is suspended in the foremost carrier arms of the tractor 7. The left mowing aggregate 8a (seen relative to the travelling direction 21) of the mower 1 is shown in the working position, whereas the right mowing aggregate 8b is shown in the transport position.

During operation the mowing aggregates 8 are carried laterally extended in a working position to mow each their respective track, which borders to or slightly overlaps the track mowed by the foremost, second mower 20. The first mowing aggregates 8 may each have a pass width of for instance 5 meters, and the foremost, second mower 20 may, in order not to exceed the maximum width for transport in a public road, have a pass width of 3 meters.

For transport, the mowing aggregates 8 are lifted by means of the beams 11 and are swung about the hinges 9 to positions above the abutment means 19, following which they are lowered to rest against this abutment means 19. The conveyors 16 have been swung into their passive position in order not to take up space between the mowing aggregates 8 in the transport position. The safety cloths 18 are folded up together with their frames in order not to extend laterally in the transport position. In this manner the transport width of the towed mover 1 is reduced to an allowable size for transport on a public road. This has been achieved simultaneously with the achievement of a hitherto unseen big pass width.

## Claims

1. A towed mower (1) comprising a running frame (2) and two mowing aggregates (8), the running frame (2) being designed to be connected with a tractor (7) to be towed thereby and being provided with ground wheels (5), the mowing aggregates (8) being mounted by a hinge (9) on each respective side of the running frame (2) to swing in a horizontal plane between a laterally extending working position and a transport position, **characterized in that** said hinges (9) of the mowing aggregates (8) are positioned at the front end of the running frame (2) and that the mowing aggregates (8) in the transport position extend rearwards from the hinges (9) and above the rearmost end of the running frame (2).

2. A mower according to claim 1, **characterized in that** the mowing aggregates (8) are arranged symmetrically relative to the running frame (2).

3. A mower according to claim 1 or 2, **characterized in that** each mowing aggregate (8) is provided with an input shaft for driving power at its end closest to the running frame (2).

4. A mower according to any one of the claims 1 - 3, **characterized in that** the running frame (2) at said rearmost end is provided with abutment means (19) for supporting the mowing aggregates (8) in the transport position.

5. A mower according to any one of the claims 1 - 4, **characterized in that** at least one of the mowing aggregates (8) is provided with a device (16) for lateral transport of mowed material.

6. A mower according to claim 5, **characterized in that** the transport device comprises a running conveyor (16).

7. A mower according to claim 6, **characterized in that** the running conveyor (16) is suspended in the frame structure (10) of the mowing aggregate for movement between a working position and a transport position.

8. A mower according to any one of the preceding claims, **characterized in that** the mowing aggregates (8) comprise rotating mowing means, preferably cutter discs mounted on top of a cutter bar.

9. A mower according to any one of the preceding claims, **characterized in that** each mowing aggregate (8) comprises a frame structure (10) and a beam (11) extending from the hinge (9) on the running frame (2) to a second hinge (12) connecting the beam (11) with the frame structure (10), whereby the latter may swing about a horizontal axis.

## Patentansprüche

1. Gezogener Mäher (1) mit einem Laufrahmen (2) und zwei Mähwerken (8), wobei der Laufrahmen (2) zur Verbindung mit einer Zugmaschine (7) ausgebildet ist, um von dieser gezogen zu werden, sowie mit Bodenrädern (5) versehen ist, wobei die Mähwerke (8) auf jeder Seite des Laufrahmens (2) über ein Gelenk (9) angebracht sind, so dass sie in einer horizontalen Ebene zwischen einer sich seitlich erstreckenden Arbeitsposition und einer Transportposition verschwenkt werden können,
**dadurch gekennzeichnet, dass** die Gelenke (9) der Mähwerke (8) an dem vorderen Ende des Laufrahmens (2) angeordnet sind und dass die Mähwerke (8) sich in der Transportposition rückseitig von den Gelenken (9) sowie über dem hintersten Ende des Laufrahmens (2) erstrecken.

2. Mäher nach Anspruch 1,
**dadurch gekennzeichnet, dass** die Mähwerke (8) relativ zu dem Laufrahmen (2) symmetrisch angeordnet sind.

3. Mäher nach Anspruch 1 oder 2,
**dadurch gekennzeichnet, dass** jedes Mähwerk (8) an seinem in unmittelbarer Nähe zu dem Laufrahmen (2) befindlichen Ende mit einer Eingangswelle für Antriebskraft versehen ist.

4. Mäher nach einem der Ansprüche 1 bis 3,
**dadurch gekennzeichnet, dass** der Laufrahmen (2) an seinem hintersten Ende mit einer Auflageeinrichtung (19) zum Abstützen der Mähwerke (8) in der Transportposition versehen ist.

5. Mäher nach einem der Ansprüche 1 bis 4,
**dadurch gekennzeichnet, dass** wenigstens eines der Mähwerke (8) mit einer Vorrichtung (16) für den Transport von Mähgut in seitlicher Richtung versehen ist.

6. Mäher nach Anspruch 5,
**dadurch gekennzeichnet, dass** die Transportvorrichtung einen Laufförderer (16) aufweist.

7. Mäher nach Anspruch 6,
**dadurch gekennzeichnet, dass** der Laufförderer (16) in der Rahmenkonstruktion (10) des Mähwerks zur Ausführung einer Bewegung zwischen einer Arbeitsposition und einer Transportposition aufgehängt ist.

8. Mäher nach einem der vorausgehenden Ansprüche,
**dadurch gekennzeichnet, dass** die Mähwerke (8) rotierende Mäheinrichtungen, vorzugsweise auf einem Messerbalken angebrachte Messerscheiben aufweisen.

9. Mäher nach einem der vorausgehenden Ansprüche,
**dadurch gekennzeichnet, dass** jedes Mähwerk (8) eine Rahmenkonstruktion (10) und einen Träger (11) aufweist, der sich von dem Gelenk (9) an dem Laufrahmen (2) zu einem zweiten Gelenk (12) erstreckt, das den Träger (11) mit der Rahmenkonstruktion (10) verbindet, so dass letztere um eine horizontale Achse schwenkbar ist.

## Revendications

1. Faucheuse tractée (1) comprenant un châssis (2) et deux dispositifs de fauchage (8), le châssis (2) étant conçu pour être raccordé à un tracteur (7) afin d'être tracté par celui-ci, et étant muni de roues au sol (5), les dispositifs de fauchage (8) étant montés sur une articulation (9) respectivement de chaque côté respectif du châssis (2) pour basculer dans un plan horizontal s'étendant latéralement entre une position de travail et une position de transport, **caractérisée en ce que** lesdites articulations (9) du dispositif de fauchage (8) sont positionnées sur l'extrémité avant du châssis (2), et **en ce que** les dispositifs de fauchage (8) dans la position de transport s'étendent vers l'arrière à partir des articulations (9) et au-dessus de l'extrémité arrière extrême du châssis (2).

2. Faucheuse selon la revendication 1, **caractérisée en ce que** les dispositifs de fauchage (8) sont disposés symétriquement par rapport au châssis (2).

3. Faucheuse selon la revendication 1 ou 2, **caractérisée en ce que** chaque dispositif de fauchage (8) est muni d'un arbre d'entrée pour la puissance d'entraînement sur son extrémité la plus proche du châssis (2).

4. Faucheuse selon l'une quelconque des revendications 1-3, **caractérisée en ce que** le châssis (2) sur son extrémité arrière extrême est muni de moyens de butée (19) pour supporter les dispositifs de fauchage (8) dans la position de transport.

5. Faucheuse selon l'une quelconque des revendications 1-4, **caractérisée en ce qu'**au moins l'un des dispositifs de fauchage (8) est muni d'un dispositif (16) pour le transport latéral du produit de fauchage.

6. Faucheuse selon la revendication 5, **caractérisée en ce que** le dispositif de transport comprend un convoyeur (16).

7. Faucheuse selon la revendication 6, **caractérisée en ce que** le convoyeur (16) est accroché à la structure de châssis (10) du dispositif de fauchage pour le mouvement entre une position de travail et une position de transport.

8. Faucheuse selon l'une quelconque des revendications précédentes, **caractérisée en ce que** les dispositifs de fauchage (8) comprennent des moyens de fauchage rotatifs, de préférence des disques de coupe montés sur le dessus de la barre de coupe.

9. Faucheuse selon l'une quelconque des revendications précédentes, **caractérisée en ce que** chaque dispositif de fauchage (8) comprend une structure de châssis (10) et une poutre (11) s'étendant à partir de l'articulation (9) sur le châssis (2), avec une seconde articulation (12) réunissant la poutre (11) à la structure de châssis (10), moyennant quoi cette dernière peut basculer autour d'un axe horizontal.
